# FASCICULE DE BREVET EUROPEEN

(11) **EP 4 014 807 B1**
(45) Date de publication et mention de la délivrance du brevet: **29.05.2024**
(21) Numéro de dépôt: 21213148.6
(22) Date de dépôt: 08.12.2021
(51) Int. Cl.: A47J 37/06, A21B 3/15

(54) **APPAREIL DE CUISSON POUR PRÉPARATIONS CULINAIRES EQUIPÉ D'UN ACCESSOIRE DE CUISSON**
KOCHGERÄT FÜR DIE ZUBEREITUNG VON KULINARISCHEN GERICHTEN, DAS MIT EINEM KOCHZUBEHÖR AUSGESTATTET IST
COOKING APPLIANCE FOR CULINARY PREPARATIONS EQUIPPED WITH A COOKING ACCESSORY

(30) Priorité: 15.12.2020 FR 2013297
(43) Date de publication de la demande: 22.06.2022
(73) Titulaire: SEB S.A., 69130 Ecully (FR)
(72) Inventeur: FORNECKER, Florent, 69620 VAL D'OINGT (FR); SUIRE, Maël, 69002 LYON (FR)
(74) Mandataire: SEB Développement

(56) Documents cités:
- EP-A1- 3 680 557
- WO-A1-2019/077309
- WO-A1-2019/092346
- CN-A- 111 973 001
- US-A1- 2006 112 952

## Description

### Domaine technique

La présente invention concerne de manière générale un appareil de cuisson et en particulier un appareil de cuisson ménager pour préparations culinaires, telles que des tartes et recettes apparentées.

### Etat de la technique

Le document WO2019/092346 divulgue un appareil de cuisson pour préparations culinaires, comportant :
- un boîtier de cuisson comprenant une embase et un couvercle monté articulé sur l'embase entre une position ouverte dans laquelle une préparation culinaire à cuire peut être introduite dans le boîtier de cuisson et une position fermée dans laquelle l'embase et le couvercle délimitent une enceinte de chauffe fermée,
- un moule à gâteaux monté de manière amovible dans l'enceinte de chauffe fermée, le moule à gâteaux comprenant plusieurs empreintes configurées chacune pour recevoir un pâton de pâte à gâteau, et
- une sole de cuisson disposée dans l'enceinte de chauffe fermée et configurée pour contacter une paroi inférieure du moule à gâteaux.

Un tel appareil de cuisson assure une cuisson homogène et précise des différents gâteaux contenus dans les empreintes du moule à gâteaux.

Bien que l'appareil de cuisson décrit dans le document WO2019/092346 soit plus particulièrement destiné à la cuisson de gâteaux, il peut être utilisé pour cuire des tartes, salées ou sucrée, des pizzas ou des recettes apparentées. Pour cela, l'utilisateur retire le moule à gâteaux hors de l'enceinte de chauffe fermée et positionne directement un plat à tarte contenant la préparation culinaire à cuire dans l'enceinte de chauffe fermée.

Cependant, lorsqu'une tarte ou une recette similaire est cuite à l'aide de l'appareil de cuisson décrit dans le document WO2019/092346, sa face inférieure a tendance à être surcuite alors que le dorage de sa face supérieure est généralement insuffisamment.

Le document EP3680557 divulgue un appareil de cuisson comprenant une embase et un couvercle.

Pour pallier cet inconvénient, il peut être envisagé d'équiper l'appareil de cuisson d'un premier relais électrique configuré pour piloter des moyens de chauffages supérieurs prévus dans le couvercle et d'un deuxième relais électrique configuré pour piloter des moyens de chauffages inférieurs prévus dans l'embase. Cependant, une telle configuration de l'appareil de cuisson augmente sensiblement les coûts de fabrication de l'appareil de cuisson.

### Résumé de l'invention

La présente invention vise à remédier à tout ou partie de ces inconvénients.

Le problème technique à la base de l'invention consiste notamment à fournir un appareil de cuisson pour préparations culinaires qui soit de structure simple et peu onéreuse, tout en garantissant une cuisson homogène sur les deux faces d'une tarte ou d'une recette apparentée.

Un autre but de la présente invention consiste à fournir un appareil de cuisson pour préparations culinaires qui garantisse une cuisson homogène de gâteaux contenus dans un moule à gâteaux reçu dans l'appareil de cuisson, et également une cuisson homogène d'une tarte ou d'une recette apparentée contenue dans un plat à tarte reçu dans l'appareil de cuisson.

A cet effet, la présente invention concerne un appareil de cuisson selon la revendication 1.

Une telle configuration de l'accessoire de cuisson, et en particulier la présence de la lame d'air entre le plat à tarte et la paroi de fond de l'accessoire de cuisson, permet d'isoler suffisamment la face inférieure de la préparation culinaire, reçue dans le plat à tarte, du rayonnement provenant de moyens de chauffage inférieurs prévus dans l'embase, et donc de ralentir la cuisson et la coloration de la face inférieure de la préparation culinaire.

De plus, la paroi de fond de l'accessoire de cuisson, qui est configurée pour former un écran thermique, permet également de ralentir la cuisson et la coloration de la face inférieure de la préparation culinaire.

En outre, le fait de surélever le plat à tarte par rapport à l'accessoire de cuisson permet de rapprocher la face supérieure de la préparation culinaire de moyens de chauffage supérieurs prévus dans le couvercle, et donc d'accentuer le dorage de la face supérieure de la préparation culinaire et de l'éloigner des moyens de chauffages inférieurs, ce qui contribue également à réduire la vitesse de cuisson et la coloration de la face inférieure de la préparation culinaire.

Ainsi, la configuration de l'accessoire de cuisson selon l'invention permet d'homogénéiser la cuisson des deux faces d'une tarte ou d'une recette apparentée, tout en conservant une construction électronique simple avec par exemple un pilotage synchronisé des moyens de chauffage supérieurs et inférieurs par un seul relais électrique.

L'appareil de cuisson peut en outre présenter une ou plusieurs des caractéristiques suivantes, prises seules ou en combinaison.

Selon un mode de réalisation de l'invention, la paroi de fond de l'accessoire de cuisson est configurée pour être située en regard du fond d'un plat à tarte supporté par l'accessoire de cuisson.

Selon un mode de réalisation de l'invention, l'au moins une protubérance de support fait saillie d'une face supérieure de la paroi de fond. L'au moins une protubérance de support peut par exemple être ménagée sur la paroi de fond de l'accessoire de cuisson.

Selon un mode de réalisation de l'invention, l'accessoire de cuisson est également configuré pour supporter un plat à pizza, également nommé plaque à pizza.

Selon un mode de réalisation de l'invention, l'au moins une protubérance de support est configurée pour permettre une circulation d'air entre la paroi de fond de l'accessoire de cuisson et le fond du plat à tarte.

Selon un mode de réalisation de l'invention, l'accessoire de cuisson comprend une pluralité de protubérances de support. De façon avantageuse, les protubérances de support sont disposées à distance d'une partie centrale de la paroi de fond de l'accessoire de cuisson.

Selon un mode de réalisation de l'invention, les protubérances de support sont espacées les unes des autres.

Selon un mode de réalisation de l'invention, au moins l'une, et par exemple chacune, des protubérances de support est située à proximité d'un bord latéral de la paroi de fond.

Selon un mode de réalisation de l'invention, au moins l'une, et par exemple chacune, des protubérances de support est allongée et s'étend selon une direction d'extension qui est sensiblement rectiligne.

Selon un mode de réalisation de l'invention, au moins l'une, et par exemple chacune, des protubérances de support est formée par un bossage de support ménagé sur la paroi de fond.

Selon un mode de réalisation de l'invention, l'accessoire de cuisson comporte une paroi latérale s'étendant vers le haut à partir d'un bord périphérique de la paroi de fond.

Selon un mode de réalisation de l'invention, la paroi latérale de l'accessoire de cuisson comporte deux échancrures de passage situées à l'opposé l'une de l'autre et destinées au passage d'une paroi latérale du plat à tarte.

Selon un mode de réalisation de l'invention, chaque échancrure de passage s'étend depuis un bord supérieur de la paroi latérale de l'accessoire de cuisson et en direction de la paroi de fond de l'accessoire de cuisson.

Selon un mode de réalisation de l'invention, chaque échancrure de passage s'étend sur toute la hauteur ou sensiblement toute la hauteur de la paroi latérale de l'accessoire de cuisson.

Selon un mode de réalisation de l'invention, l'accessoire de cuisson comporte deux poignées de préhension situées à l'opposé l'une de l'autre.

Selon un mode de réalisation de l'invention, chacune des poignées de préhension s'étend à partir d'un bord supérieur de la paroi latérale de l'accessoire de cuisson.

Selon un mode de réalisation de l'invention, chacune des poignées de préhension est sensiblement plane. De façon avantageuse, les poignées de préhension s'étendent sensiblement parallèlement à la paroi de fond de l'accessoire de cuisson.

Selon un mode de réalisation de l'invention, la paroi de fond de l'accessoire de cuisson est sensiblement plane.

Selon un mode de réalisation de l'invention, la paroi de fond de l'accessoire de cuisson présente une forme globalement rectangulaire.

Selon un mode de réalisation de l'invention, la paroi de fond de l'accessoire de cuisson comporte une surface de cuisson qui est configurée pour directement supporter une préparation culinaire à cuire, telle qu'un ou plusieurs pâtons, par exemple de pâte à pain, de pâte à brioche, de pâte à cookie, etc.

De manière avantageuse, la paroi de fond est recouverte d'une surface antiadhésive telle un revêtement à base de PTFE (Polytétrafluoroéthylène).

Dans une telle utilisation, avec le ou les pâtons directement au contact de la paroi de fond, l'accessoire de cuisson présente l'avantage de permettre une cuisson plus homogène, en rapprochant le ou les pâtons des moyens de chauffages de supérieurs et en l'éloignant des moyens de chauffages inférieurs.

A titre d'exemple, une telle utilisation de l'accessoire de cuisson s'avère particulièrement adaptée pour garantir une cuisson homogène des pains ou brioches d'environ 400 g.

Selon un mode de réalisation de l'invention, le couvercle comporte une cuve supérieure qui est configurée pour être située en regard de l'accessoire de cuisson lorsque le couvercle occupe la position fermée, la cuve supérieure et l'accessoire de cuisson étant configurés pour délimiter au moins en partie une enceinte de cuisson, par exemple une enceinte de cuisson fermée, lorsque le couvercle occupe la position fermée.

Selon un mode de réalisation de l'invention, la cuve supérieure est disposée dans l'enceinte de chauffe fermée.

Selon un mode de réalisation de l'invention, la cuve supérieure est métallique.

Selon un mode de réalisation de l'invention, la cuve supérieure comporte au moins un évent d'évacuation de vapeur, par exemple situé sur une partie arrière de la cuve supérieure.

Selon un mode de réalisation de l'invention, l'appareil de cuisson comprend en outre des moyens de chauffage inférieurs prévus dans l'embase et/ou des moyens de chauffage supérieurs prévus dans le couvercle.

Selon un mode de réalisation de l'invention, l'accessoire de cuisson est disposé au-dessus des moyens de chauffage inférieurs. De façon avantageuse, la paroi de fond est configurée pour être disposée entre les moyens de chauffage inférieurs et le fond d'un plat à tarte supporté par l'accessoire de cuisson.

Selon un mode de réalisation de l'invention, les moyens de chauffage inférieurs et les moyens de chauffage supérieurs sont disposés dans l'enceinte de chauffe fermée.

Selon l'invention, l'appareil de cuisson comporte des moyens de commande configurés pour commander un chauffage des moyens de chauffage supérieurs et un chauffage des moyens de chauffage inférieurs.

Selon l'invention, les moyens de commande comportent un relais alimentant simultanément les moyens de chauffage supérieurs et les moyens de chauffage inférieurs.

Une telle construction présente l'avantage d'être peu coûteuse à mettre en oeuvre.

Selon un mode de réalisation de l'invention, l'appareil de cuisson comprend des moyens de positionnement et de maintien configurés pour positionner l'accessoire de cuisson dans l'enceinte de chauffe fermée et maintenir l'accessoire de cuisson à distance des moyens de chauffage inférieurs.

Selon un mode de réalisation de l'invention, l'appareil de cuisson comprend une sole de cuisson configurée pour être disposée entre les moyens de chauffage inférieurs et l'accessoire de cuisson, et plus particulièrement entre les moyens de chauffage inférieurs et la paroi de fond de l'accessoire de cuisson.

Selon un mode de réalisation de l'invention, la sole de cuisson est métallique.

Selon un mode de réalisation de l'invention, la sole de cuisson est formée par une plaque métallique.

Selon un mode de réalisation de l'invention, la plaque métallique est ondulée ou gaufrée.

Selon un mode de réalisation de l'invention, la plaque métallique est perforée.

Selon un mode de réalisation de l'invention, l'accessoire de cuisson est configuré pour être espacé des moyens de chauffage inférieurs d'une distance supérieure à 2,5 cm, et par exemple comprise entre 2,5 et 4,5 cm, et avantageusement entre 3 et 4 cm .

Selon l'invention, les moyens de chauffage inférieurs comportent une résistance électrique chauffante inférieure et/ou les moyens de chauffage supérieurs comportent une résistance électrique chauffante supérieure.

Selon un mode de réalisation de l'invention, le couvercle est monté articulé sur l'embase par l'intermédiaire d'une liaison pivot située sur une partie arrière du boîtier de cuisson. Selon un mode de réalisation de l'invention, l'appareil de cuisson comporte des poignées latérales prévues sur le couvercle et configurées pour permettre à un utilisateur de déplacer le couvercle entre la position fermée et la position ouverte.

Selon un mode de réalisation de l'invention, le couvercle et l'embase comportent respectivement un réflecteur supérieur et un réflecteur inférieur qui sont configurés pour former l'enceinte de chauffe fermée lorsque le couvercle occupe la position fermée.

Selon un mode de réalisation de l'invention, le réflecteur supérieur est configuré pour être situé en regard du réflecteur inférieur lorsque le couvercle occupe la position fermée.

Selon un mode de réalisation de l'invention, la cuve supérieure est montée dans le réflecteur supérieur. Ainsi, le réflecteur supérieur forme une contre-cuve supérieure.

Selon un mode de réalisation de l'invention, l'accessoire de cuisson est configuré pour être monté de manière amovible dans le réflecteur inférieur.

Selon un mode de réalisation de l'invention, l'accessoire de cuisson et le réflecteur inférieur sont configurés de telle sorte que le fond du réflecteur inférieur est situé à distance de la paroi de fond de l'accessoire de cuisson.

Selon un mode de réalisation de l'invention, les moyens de positionnement et de maintien sont prévus sur l'embase.

Selon un mode de réalisation de l'invention, les moyens de positionnement et de maintien comportent deux surfaces d'appui sur lesquelles les poignées de préhension de l'accessoire de cuisson sont configurées pour reposer.

Selon un mode de réalisation de l'invention, le réflecteur supérieur et le réflecteur inférieur sont métalliques.

Selon un mode de réalisation de l'invention, la cuve supérieure et le réflecteur supérieur sont configurés de telle sorte que le réflecteur supérieur est situé à distance de la paroi latérale et du fond de la cuve supérieure.

Selon un mode de réalisation de l'invention, le réflecteur supérieur est configuré pour réfléchir un rayonnement de chauffage provenant des moyens de chauffage supérieurs vers la cuve supérieure.

Selon un mode de réalisation de l'invention, le réflecteur inférieur est configuré pour réfléchir un rayonnement de chauffage provenant des moyens de chauffage inférieurs vers l'accessoire de cuisson.

Selon un mode de réalisation de l'invention, les moyens de chauffage inférieurs sont supportés par le réflecteur inférieur, et sont avantageusement fixés au réflecteur inférieur.

Selon un mode de réalisation de l'invention, les moyens de chauffage supérieurs sont supportés par le réflecteur supérieur, et sont avantageusement fixés au réflecteur supérieur.

Selon un mode de réalisation de l'invention, la cuve supérieure, le réflecteur inférieur et l'accessoire de cuisson sont configurés pour délimiter l'enceinte de cuisson.

Selon un mode de réalisation de l'invention, l'accessoire de cuisson présente une forme au moins partiellement complémentaire de celle du réflecteur inférieur.

Selon un mode de réalisation de l'invention, la paroi latérale de l'accessoire de cuisson présente une forme au moins partiellement complémentaire de celle de la paroi latérale du réflecteur inférieur.

Selon un mode de réalisation de l'invention, l'appareil de cuisson comporte une cuve inférieure configurée pour être montée de manière amovible dans l'enceinte de chauffe fermée, et en particulier dans le réflecteur inférieur, lorsque l'accessoire de cuisson est retiré hors de l'enceinte de chauffe fermée.

Selon un mode de réalisation de l'invention, la cuve inférieure est métallique.

Selon un mode de réalisation de l'invention, l'accessoire de cuisson présente une profondeur inférieure à une profondeur de la cuve inférieure.

Selon un mode de réalisation de l'invention, l'appareil de cuisson comprend en outre au moins un moule, tel qu'un moule à gâteaux, configuré pour être monté de manière amovible dans l'enceinte de chauffe fermée lorsque l'accessoire de cuisson est retiré hors de l'enceinte de chauffe fermée.

Selon un mode de réalisation de l'invention, l'au moins un moule comprend plusieurs empreintes configurées chacune pour recevoir un pâton, et par exemple un pâton de pâte à gâteau.

Selon un mode de réalisation de l'invention, l'appareil de cuisson comporte une pluralité de moules, par exemple de différentes formes et/ou de différentes profondeurs, configurés chacun pour être monté de manière amovible dans l'enceinte de chauffe fermée lorsque l'accessoire de cuisson est retiré hors de l'enceinte de chauffe fermée.

Selon un mode de réalisation de l'invention, le couvercle comporte une partie de boîtier supérieure, par exemple réalisée en matière plastique, et l'embase comporte une partie de boîtier inférieure, par exemple réalisée en matière plastique.

Selon un mode de réalisation de l'invention, le réflecteur supérieur est monté dans la partie de boîtier supérieure, et le réflecteur inférieur est monté dans la partie de boîtier inférieure.

Selon un mode de réalisation de l'invention, la partie de boîtier supérieure comporte au moins un orifice d'évacuation de vapeur.

Selon un mode de réalisation de l'invention, les moyens de chauffage inférieurs sont disposés entre le réflecteur inférieur et l'accessoire de cuisson, et/ou les moyens de chauffage supérieurs sont disposés entre le réflecteur supérieur et la cuve supérieure.

Selon un mode de réalisation de l'invention, le réflecteur supérieur délimite un logement de réception supérieur dans lequel est montée la cuve supérieure.

Selon un mode de réalisation de l'invention, le réflecteur inférieur délimite un logement de réception inférieur dans lequel est monté amovible l'accessoire de cuisson.

Selon un mode de réalisation de l'invention, l'appareil de cuisson comporte une interface de commande prévue sur une partie avant du boîtier de cuisson, et par exemple sur une partie avant de l'embase.

### Brève description des figures

L'invention sera bien comprise à l'aide de la description qui suit en référence aux dessins schématiques annexés représentant, à titre d'exemple non limitatif, une forme d'exécution de cet appareil de cuisson.
[Fig. 1] La figure 1 est une vue en perspective d'un appareil de cuisson pour préparations culinaires selon l'invention, montrant un couvercle de l'appareil de cuisson en position fermée.
[Fig. 2] La figure 2 est une vue en perspective de l'appareil de cuisson de la figure 1, montrant le couvercle en position ouverte et équipé de l'accessoire de cuisson.
[Fig. 3] La figure 3 est une vue en perspective de l'appareil de cuisson de la figure 1 équipé d'un plat à tarte et montrant le couvercle en position ouverte.
[Fig. 4] La figure 4 est une vue en coupe de l'appareil de cuisson de la figure 1 équipé d'un plat à tarte et montrant le couvercle en position fermée.
[Fig. 5] La figure 5 est une vue en perspective d'un accessoire de cuisson selon un premier mode de réalisation de l'invention.
[Fig. 6] La figure 6 est une vue en perspective de l'appareil de cuisson de la figure 1, dans laquelle le couvercle est en position ouverte et l'accessoire de cuisson a été retiré.
[Fig. 7] La figure 7 est une vue en perspective d'un accessoire de cuisson selon un deuxième mode de réalisation de l'invention.
[Fig. 8] La figure 8 est une vue en perspective d'un accessoire de cuisson selon un troisième mode de réalisation de l'invention.
[Fig. 9] La figure 9 est une vue en coupe de l'appareil de cuisson de la figure 1 équipé d'un moule, à la place de l'accessoire de cuisson, et montrant le couvercle en position fermée.
[Fig. 10] La figure 10 est une vue en perspective de l'appareil de cuisson de la figure 1 équipé du moule de la figure 9 et montrant le couvercle en position ouverte.
[Fig. 11] La figure 11 est une vue en perspective de l'appareil de cuisson de la figure 1 équipé d'une cuve inférieure et montrant le couvercle en position ouverte.

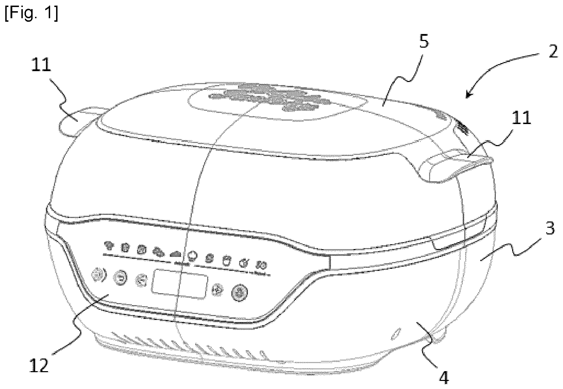

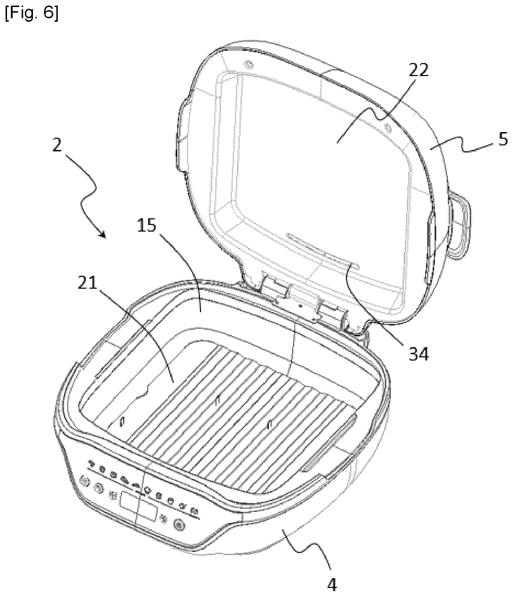

Les figures 1 à 11 représentent un appareil de cuisson 2 pour préparations culinaires qui est configuré pour reposer sur un support plan, tel qu'une table ou un plan de travail.

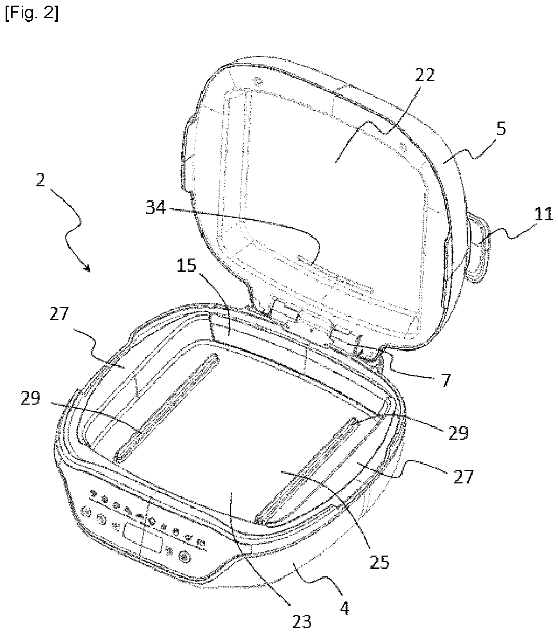

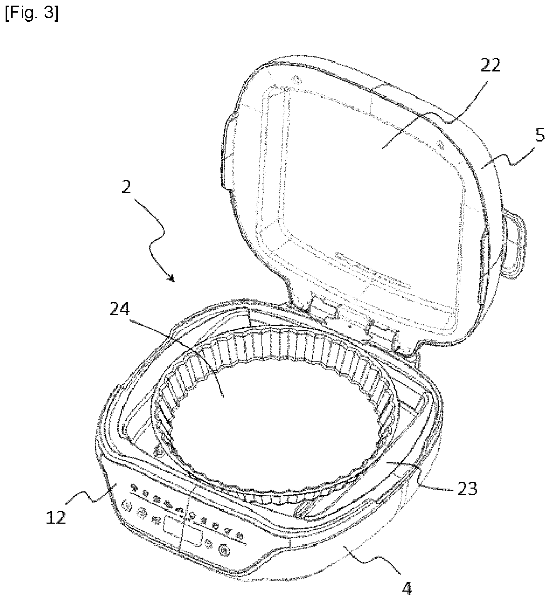

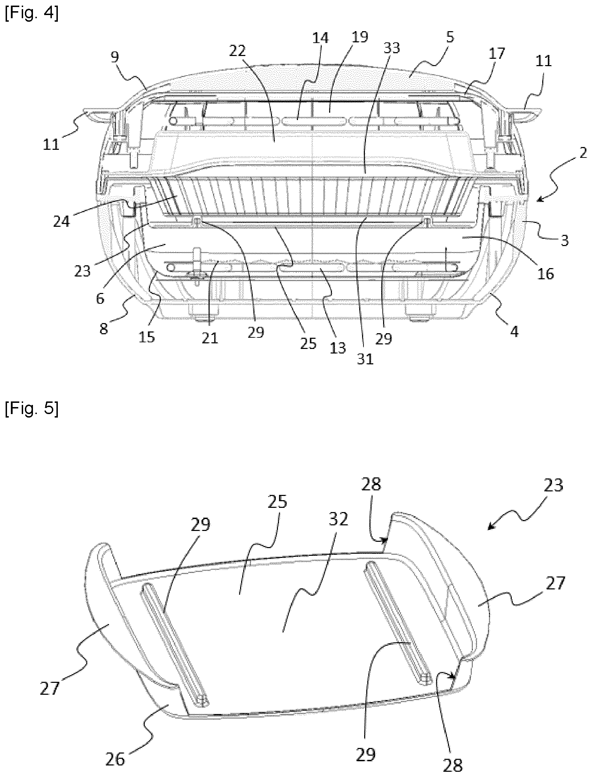

L'appareil de cuisson 2 comporte un boîtier de cuisson 3 comprenant une embase 4 et un couvercle 5 monté articulé sur l'embase 4 entre une position ouverte (voir les figures 2 et 3) dans laquelle une préparation culinaire à cuire, telle qu'une tarte, une pizza ou une recette similaire, peut être introduite dans le boîtier de cuisson 3 et une position fermée (voir les figures 1 et 4) dans laquelle l'embase 4 et le couvercle 5 délimitent une enceinte de chauffe fermée 6.

Selon le mode de réalisation représenté sur les figures, le couvercle 5 est monté pivotant sur l'embase 4 par l'intermédiaire d'une charnière 7 située à l'arrière du boîtier de cuisson 3. De façon avantageuse, la charnière 7 définit un axe de pivotement qui est sensiblement horizontal lorsque le boîtier de cuisson 3 repose sur un support plan.

Selon le mode de réalisation représenté sur les figures, l'embase 4 comporte une partie de boîtier inférieure 8 par exemple réalisée en matière plastique, et le couvercle 5 comporte une partie de boîtier supérieure 9 par exemple réalisée en matière plastique. De façon avantageuse, la partie de boîtier supérieure 9 comporte des poignées latérales 11 configurées pour permettre à un utilisateur de déplacer aisément le couvercle 5 entre la position fermée et la position ouverte.

L'appareil de cuisson 2 comporte également une interface de commande 12, également nommée interface homme machine, prévue sur une partie avant du boîtier de cuisson 3, et par exemple sur une partie avant de l'embase 4. De façon avantageuse, l'interface de commande 12 comporte un afficheur et des boutons de commande pour permettre à un utilisateur de démarrer/arrêter l'appareil de cuisson 2 et de définir des cycles de cuisson.

L'appareil de cuisson 2 comprend en outre des moyens de chauffage inférieurs prévus dans l'embase 4 et des moyens de chauffage supérieurs prévus dans le couvercle 5. De façon avantageuse, les moyens de chauffage inférieurs et les moyens de chauffage supérieurs sont disposés dans l'enceinte de chauffe fermée 6. Les moyens de chauffage inférieurs et les moyens de chauffage supérieurs sont préférentiellement pilotés de façon synchronisée par un seul relais électrique. Ainsi, la régulation thermique de l'enceinte de chauffe fermée 6 s'effectue au moyen d'un seul thermostat qui pilote de façon synchronisée les moyens de chauffage inférieurs et les moyens de chauffage supérieurs.

Selon le mode de réalisation représenté sur les figures, les moyens de chauffage inférieurs comportent une résistance électrique chauffante inférieure 13, et les moyens de chauffage supérieurs comportent une résistance électrique chauffante supérieure 14.

Comme montré plus particulièrement sur la figure 4, l'embase 4 comporte un réflecteur inférieur 15 qui est monté dans la partie de boîtier inférieure 8 et qui délimite un logement de réception inférieur 16, et le couvercle 5 comporte un réflecteur supérieur 17 qui est monté dans la partie de boîtier supérieure 9 et qui délimite un logement de réception supérieur 19. De façon avantageuse, le réflecteur supérieur 17 et le réflecteur inférieur 15 sont métalliques.

Le réflecteur supérieur 17 et le réflecteur inférieur 15 sont configurés pour être situés en regard l'un de l'autre lorsque le couvercle 5 occupe la position fermée, de sorte à former l'enceinte de chauffe fermée 6 dans laquelle sont disposés les moyens de chauffage inférieurs et supérieurs. De façon avantageuse, les moyens de chauffage inférieurs sont supportés par le réflecteur inférieur 15, et les moyens de chauffage supérieurs sont supportés par le réflecteur supérieur 17.

L'appareil de cuisson 2 comprend en outre une sole de cuisson 21 disposée dans le logement de réception inférieur 16 délimité par le réflecteur inférieur 15 et située au-dessus des moyens de chauffage inférieurs. De façon avantageuse, la sole de cuisson 21 est configurée pour recouvrir intégralement les moyens de chauffages inférieurs.

La sole de cuisson 21 peut par exemple être supportée par le réflecteur inférieur 15, et en particulier être fixée au réflecteur inférieur 15. La sole de cuisson 21 pourrait cependant directement reposer sur les moyens de chauffage inférieurs, et être montée amovible dans le logement de réception inférieur 16.

De façon avantageuse, la sole de cuisson 21 est formée par une plaque métallique qui peut être ondulée ou gaufrée. La sole de cuisson 21 peut également être perforée, et comprendre par exemple une pluralité de perforations qui permettent de laisser passer un flux d'air provenant de la résistance électrique chauffante inférieure 13.

L'appareil de cuisson 2 comprend également une cuve supérieure 22 qui est avantageusement métallique et qui est disposée dans l'enceinte de chauffe fermée 6, et plus particulièrement dans le logement de réception supérieur 19 délimité par le réflecteur supérieur 17. La cuve supérieure 22 est disposée sous les moyens de chauffage supérieurs, et le réflecteur supérieur 17 est plus particulièrement configuré pour réfléchir un rayonnement de chauffage provenant des moyens de chauffage supérieurs vers la cuve supérieure 22.

La cuve supérieure 22 peut par exemple être fixée au réflecteur supérieur 17 ou à la partie de boîtier supérieure 9.

L'appareil de cuisson 2 comprend en outre un accessoire de cuisson 23 qui est configuré pour supporter un plat à tarte 24, et qui est monté de manière amovible dans l'enceinte de chauffe fermée 6, et plus particulièrement dans le logement de réception inférieur 16 délimité par le réflecteur inférieur 15.

Comme montré sur la figure 4, l'accessoire de cuisson 23 est disposé au-dessus de la sole de cuisson 21 et des moyens de chauffage inférieurs, et la sole de cuisson 21 est interposée entre les moyens de chauffage inférieurs et l'accessoire de cuisson 23. De façon avantageuse, le réflecteur inférieur 15 est configuré pour réfléchir un rayonnement de chauffage provenant des moyens de chauffage inférieurs vers l'accessoire de cuisson 23.

Comme montré sur la figure 5, l'accessoire de cuisson 23 comprend une paroi de fond 25 qui est globalement plane et qui est configurée pour être située en regard du fond d'un plat à tarte 24 supporté par l'accessoire de cuisson 23. La paroi de fond 25 forme plus particulièrement un écran thermique pour le plat à tarte 24 reposant sur l'accessoire de cuisson 23. Selon le mode de réalisation représenté sur les figures, la paroi de fond 25 de l'accessoire de cuisson 23 présente une forme globalement rectangulaire. Cependant, la paroi de fond 25 pourrait présenter une toute autre forme, et par exemple carrée ou circulaire.

De façon avantageuse, l'appareil de cuisson 2 est configuré de telle sorte que la paroi de fond 25 de l'accessoire de cuisson 23 est espacée des moyens de chauffage inférieurs d'une distance supérieure à 2,5 cm, et par exemple comprise entre 2,5 et 4,5 cm, et avantageusement entre 3 et 4 cm.

L'accessoire de cuisson 23 comprend en outre une paroi latérale 26 qui s'étend vers le haut à partir d'un bord périphérique de la paroi de fond 25.

L'accessoire de cuisson 23 comporte également deux poignées de préhension 27 situées à l'opposé l'une de l'autre, et s'étendant chacune à partir d'un bord supérieur de la paroi latérale 26 de l'accessoire de cuisson 23. Selon le mode de réalisation représenté sur les figures, chacune des poignées de préhension 27 est sensiblement plane et s'étend sensiblement parallèlement à la paroi de fond 25 de l'accessoire de cuisson 23.

De façon avantageuse, les poignées de préhension 27 sont configurées pour reposer sur deux surfaces d'appui prévues sur l'embase 4, de manière à positionner l'accessoire de cuisson 23 dans l'enceinte de chauffe fermée 6 et à maintenir l'accessoire de cuisson 23 à distance des moyens de chauffage inférieurs. Les deux surfaces d'appui peuvent par exemple être formées par deux rebords d'appui prévus sur le réflecteur inférieur 15, ou encore être prévues sur la partie de boîtier inférieure 8.

Selon le mode de réalisation représenté sur les figures, la paroi latérale 26 de l'accessoire de cuisson 23 comporte deux échancrures de passage 28 situées à l'opposé l'une de l'autre et destinées au passage d'une paroi latérale d'un plat à tarte 24. Les échancrures de passage 28 permettent en particulier de positionner des plats à tarte de différents diamètres sur l'accessoire de cuisson 23, et de limiter les coûts de fabrication de l'accessoire de cuisson 23.

De façon avantageuse, chaque échancrure de passage 28 s'étend depuis un bord supérieur de la paroi latérale 26 de l'accessoire de cuisson 23 et en direction de la paroi de fond 25 de l'accessoire de cuisson 23. Chaque échancrure de passage 28 peut par exemple s'étendre sur sensiblement toute la hauteur de la paroi latérale 26 de l'accessoire de cuisson 23, de manière à définir deux portions de paroi latérale séparées l'une de l'autre.

L'accessoire de cuisson 23 comporte en outre une pluralité de protubérances de support 29 qui font saillie d'une face supérieure de la paroi de fond 25 et sur lesquelles est destiné à reposer le plat à tarte 24. Les protubérances de support 29 sont plus particulièrement configurées pour surélever le plat à tarte 24 par rapport à la paroi de fond 25 de l'accessoire de cuisson 23 et pour délimiter une lame d'air 31 entre la paroi de fond 25 de l'accessoire de cuisson 23 et un fond du plat à tarte 24, lorsque le plat à tarte 24 repose sur les protubérances de support 29. La lame d'air 31 présente une hauteur comprise entre 2 et 15 mm, par exemple comprise entre 2 et 10 mm, et par exemple d'environ 5 mm.

Selon le mode de réalisation représenté sur les figures, l'accessoire de cuisson 23 comporte deux protubérances de support 29 qui sont espacées l'une de l'autre, et qui sont sensiblement rectilignes, de manière à former des nervures de support. Les deux protubérances de support 29 peuvent par exemple s'étendre sensiblement parallèlement l'une à l'autre ou diverger l'une par rapport à l'autre.

Comme montré sur la figure 5, chacune des protubérances de support 29 s'étend avantageusement à proximité d'un bord latéral respectif de la paroi de fond 25. Chaque protubérance de support 29 peut par exemple être située à proximité d'un bord latéral de la paroi de fond 25 qui est orienté du côté d'une poignée de préhension 27 de l'accessoire de cuisson 23, ou être située à proximité d'un bord latéral de la paroi de fond 25 qui s'étend transversalement aux poignées de préhension 27.

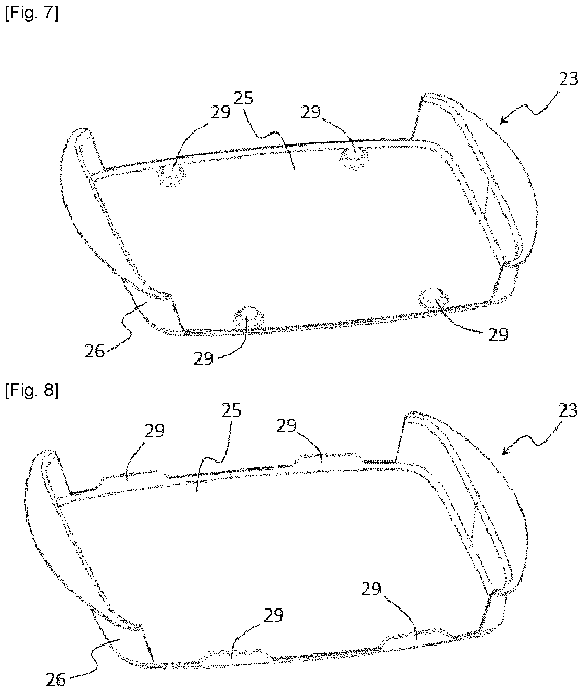

Chacune des protubérances de support 29 peut par exemple être rapportée et fixée sur la paroi de fond 25 de l'accessoire de cuisson 23, ou, comme montré sur les figures 5 et 7, être directement ménagée sur la paroi de fond 25, et par exemple être obtenue par emboutissage de la paroi de fond 25.

Selon une variante de réalisation de l'invention montrée sur la figure 7, au moins l'une, et par exemple chacune, des protubérances de support 29 est formée par un ergot de support ou par un bossage de support présentant par exemple une section de forme circulaire.

Selon une autre variante de réalisation de l'invention montrée sur la figure 8, chacune des protubérances de support 29 peut être rectiligne et s'étendre le long d'un bord latéral de la paroi de fond 25 qui s'étend transversalement aux poignées de préhension 27. Deux protubérances de support 29 peuvent par exemple être prévues le long d'un même bord latéral de la paroi de fond 25 qui s'étend transversalement aux poignées de préhension 27.

Selon encore une autre variante de réalisation de l'invention, chacune des protubérances de support 29 pourrait être formée sur la paroi latérale 26 de l'accessoire de cuisson.

De façon avantageuse, les protubérances de support 29 sont disposées à distance d'une partie centrale de la paroi de fond 25 de l'accessoire de cuisson 23, de telle sorte que la paroi de fond 25 comporte une surface de cuisson 32 qui est configurée pour directement supporter une ou plusieurs préparations culinaires à cuire, telles qu'un ou plusieurs pâtons, par exemple de pâte à pain, de pâte à brioche, de pâte à cookie, etc.

Selon un mode de réalisation de l'invention, l'accessoire de cuisson 23 présente une forme au moins partiellement complémentaire de celle du réflecteur inférieur 15. Par exemple, la paroi latérale 26 de l'accessoire de cuisson 23 peut présenter une forme au moins partiellement complémentaire de celle de la paroi latérale du réflecteur inférieur 15, et/ou les bords latéraux de la paroi de fond 25, qui s'étendent transversalement aux poignées de préhension 27, peuvent également présenter une forme au moins partiellement complémentaire de celle de la paroi latérale du réflecteur inférieur 15

Comme montré sur la figure 4, la cuve supérieure 22 est configurée pour être située en regard de l'accessoire de cuisson 23, et plus particulièrement de la paroi de fond 25 de l'accessoire de cuisson, lorsque le couvercle 5 occupe la position fermée, et la cuve supérieure 22 et l'accessoire de cuisson 23 sont configurés pour délimiter au moins en partie une enceinte de cuisson 33 lorsque le couvercle 5 occupe la position fermée. Selon le mode de réalisation représenté sur les figures, l'enceinte de cuisson 33 est délimitée par la cuve supérieure 22, l'accessoire de cuisson 23 et le réflecteur inférieur 15, mais elle pourrait être délimitée uniquement par la cuve supérieure 22 et l'accessoire de cuisson 23.

De façon avantageuse, la cuve supérieure 22 comporte un évent d'évacuation de vapeur 34 configuré pour évacuer, hors de l'enceinte de cuisson 33 et plus particulièrement vers l'enceinte de chauffe fermée 6, la vapeur produite dans l'enceinte de cuisson 33 lors de la cuisson de la préparation culinaire. Afin d'évacuer la vapeur contenue dans l'enceinte de chauffe fermée 6 hors du boîtier de cuisson 3, le couvercle 5 comporte avantageusement un passage d'évacuation de vapeur (non visible sur les figures) débouchant d'une part dans le logement de réception supérieur 19 délimité par le réflecteur supérieur 17 et d'autre part à l'extérieur du boîtier de cuisson 3 et plus particulièrement dans une surface externe de la partie de boîtier supérieure 9. De façon avantageuse, l'évent d'évacuation de vapeur 34 est situé sur une partie arrière de la cuve supérieure 22, et le passage d'évacuation de vapeur est situé sur une partie arrière du couvercle 5.

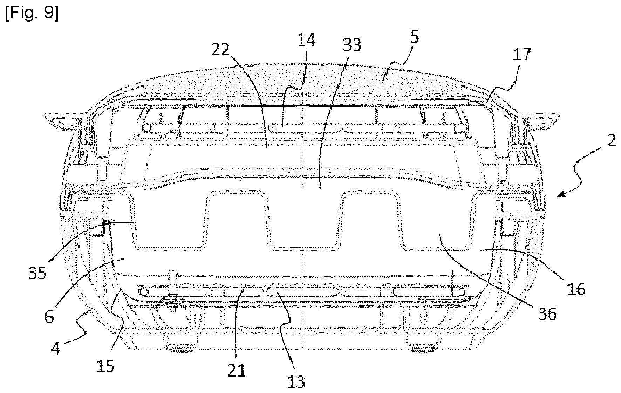

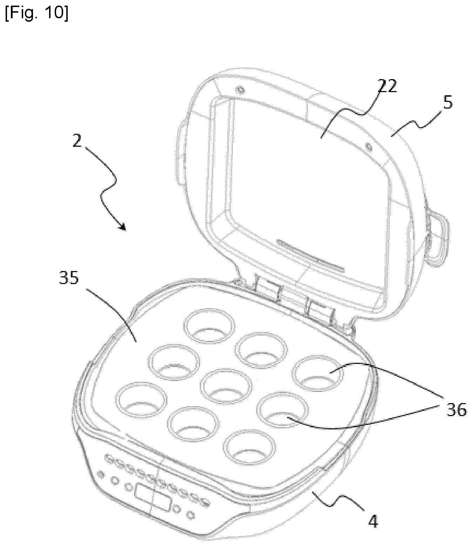

Comme montré sur les figures 9 et 10, l'appareil de cuisson 2 comprend en outre un moule 35, tel qu'un moule à gâteaux, configuré pour être monté de manière amovible dans l'enceinte de chauffe fermée 6, et en particulier dans le logement de réception inférieur 16 délimité par le réflecteur inférieur 15, lorsque l'accessoire de cuisson 23 est retiré hors de l'enceinte de chauffe fermée 6. Le moule 35 comporte avantageusement plusieurs empreintes 36 configurées chacune pour recevoir un pâton, et par exemple un pâton de pâte à gâteau.

Ainsi, l'appareil de cuisson 2 selon l'invention permet, en plus de pouvoir réaliser une cuisson homogène d'une tarte à l'aide de l'accessoire de cuisson 23, de réaliser une cuisson homogène de gâteaux à l'aide du moule 35.

Selon une variante de réalisation de l'invention non représentée sur les figures, l'appareil de cuisson 2 pourrait comporter une pluralité de moules 35, par exemple de différentes formes et/ou de différentes profondeurs, configurés chacun pour être monté de manière amovible dans l'enceinte de chauffe fermée 6 lorsque l'accessoire de cuisson 23 est retiré hors de l'enceinte de chauffe fermée 6.

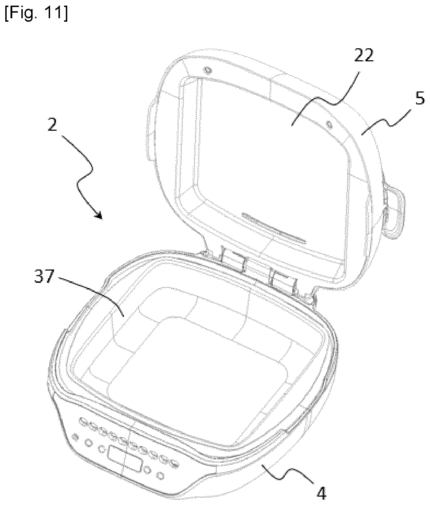

Comme montré sur la figure 11, l'appareil de cuisson 2 comporte en outre une cuve inférieure 37, par exemple métallique, qui est configurée pour être montée de manière amovible dans l'enceinte de chauffe fermée 6, et en particulier dans le logement de réception inférieur 16 délimité par le réflecteur inférieur 15, lorsque l'accessoire de cuisson 23 est retiré hors de l'enceinte de chauffe fermée 6, et qui est configurée pour être située en regard de la cuve supérieure 22 lorsque le couvercle 5 occupe la position fermée. La cuve inférieure 37 est plus particulièrement destinée à recevoir directement une préparation culinaire à cuire. De façon avantageuse, l'accessoire de cuisson 23 présente une profondeur inférieure à une profondeur de la cuve inférieure 37.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention défini par les revendications.

## Revendications

1. Appareil de cuisson (2) pour préparations culinaires, comportant :
- un boîtier de cuisson (3) comprenant une embase (4) et un couvercle (5) monté articulé sur l'embase (4) entre une position ouverte dans laquelle une préparation culinaire à cuire peut être introduite dans le boîtier de cuisson (3) et une position fermée dans laquelle l'embase (4) et le couvercle (5) délimitent une enceinte de chauffe fermée (6),
- l'appareil de cuisson (2) comprenant en outre des moyens de chauffage inférieurs prévus dans l'embase (4) comprenant une résistance électrique chauffante inférieure (13) et des moyens de chauffage supérieurs prévus dans le couvercle (5) comprenant une résistance électrique chauffante supérieure (14), et
- des moyens de commande configurés pour commander un chauffage des moyens de chauffage supérieurs (14) et un chauffage des moyens de chauffage inférieurs (13), lesdits moyens de commande comportant un relais alimentant simultanément les moyens de chauffage supérieurs (14) et les moyens de chauffage inférieurs (13).
- un accessoire de cuisson (23) monté de manière amovible dans l'enceinte de chauffe fermée (6) et configuré pour supporter un plat à tarte (24), l'accessoire de cuisson (23) comprenant une paroi de fond (25) et au moins une protubérance de support (29) sur laquelle est destiné à reposer le plat à tarte (24), l'au moins une protubérance de support (29) étant configurée pour surélever le plat à tarte (24) par rapport à la paroi de fond (25) de l'accessoire de cuisson (23) et pour délimiter une lame d'air (31) entre la paroi de fond (25) de l'accessoire de cuisson (23) et un fond du plat à tarte (24), lorsque le plat à tarte (24) repose sur l'au moins une protubérance de support (29).

2. Appareil de cuisson (2) selon la revendication 1, dans lequel l'au moins une protubérance de support (29) fait saillie d'une face supérieure de la paroi de fond (25).

3. Appareil de cuisson (2) selon la revendication 1 ou 2, dans lequel l'accessoire de cuisson (23) comporte une paroi latérale (26) s'étendant vers le haut à partir d'un bord périphérique de la paroi de fond (25).

4. Appareil de cuisson (2) selon la revendication 3, dans lequel la paroi latérale (26) de l'accessoire de cuisson (23) comporte deux échancrures de passage (28) situées à l'opposé l'une de l'autre.

5. Appareil de cuisson (2) selon l'une quelconque des revendications 1 à 4, dans lequel l'accessoire de cuisson (23) comporte deux poignées de préhension (27) situées à l'opposé l'une de l'autre.

6. Appareil de cuisson (2) selon l'une quelconque des revendications 1 à 5, dans lequel la paroi de fond (25) de l'accessoire de cuisson (23) est sensiblement plane.

7. Appareil de cuisson (2) selon l'une quelconque des revendications 1 à 6, dans lequel le couvercle (5) comporte une cuve supérieure (22) qui est configurée pour être située en regard de l'accessoire de cuisson (23) lorsque le couvercle (5) occupe la position fermée, la cuve supérieure (22) et l'accessoire de cuisson (23) étant configurés pour délimiter au moins en partie une enceinte de cuisson lorsque le couvercle (5) occupe la position fermée.

8. Appareil de cuisson (2) selon l'une quelconque des revendications 1 à 7, lequel comprend des moyens de positionnement et de maintien configurés pour positionner l'accessoire de cuisson (23) dans l'enceinte de chauffe fermée (6) et maintenir l'accessoire de cuisson (23) à distance des moyens de chauffage inférieurs.

9. Appareil de cuisson (2) selon l'une quelconque des revendications 1 à 8, lequel comprend une sole de cuisson (21) configurée pour être disposée entre les moyens de chauffage inférieurs et l'accessoire de cuisson (23).

10. Appareil de cuisson (2) selon l'une quelconque des revendications 1 à 9, dans lequel l'accessoire de cuisson (23) est configuré pour être espacé des moyens de chauffage inférieurs d'une distance supérieure à 2,5 cm.

11. Appareil de cuisson (2) selon l'une quelconque des revendications 1 à 10, dans lequel le couvercle (5) est monté articulé sur l'embase (4) par l'intermédiaire d'une liaison pivot située sur une partie arrière du boîtier de cuisson (3).

12. Appareil de cuisson (2) selon l'une quelconque des revendications 1 à 11, dans lequel le couvercle (5) et l'embase (4) comportent respectivement un réflecteur supérieur (17) et un réflecteur inférieur (15) qui sont configurés pour former l'enceinte de chauffe fermée (6) lorsque le couvercle (5) occupe la position fermée.

13. Appareil de cuisson (2) selon l'une quelconque des revendications 1 à 12, lequel comprend en outre au moins un moule (35) configuré pour être monté de manière amovible dans l'enceinte de chauffe fermée (6) lorsque l'accessoire de cuisson (23) est retiré hors de l'enceinte de chauffe fermée (6).

## Patentansprüche

1. Kochgerät (2) für kulinarische Zubereitungen, umfassend:
- einen Kochbehälter (3), umfassend eine Basis (4) und einen Deckel (5), der an der Basis (4) angelenkt zwischen einer offenen Position, in der eine zu backende kulinarische Zubereitung in den Kochbehälter (3) eingeführt werden kann, und einer geschlossenen Position, in der die Basis (4) und der Deckel (5) einen geschlossenen Heizraum (6) begrenzen, angebracht ist,
- wobei das Kochgerät (2) weiter untere Heizmittel umfasst, die in der Basis (4) vorgesehen sind und eine unteren elektrischen Heizwiderstand (13) umfassen, und obere Heizmittel, die im Deckel (5) vorgesehen sind und einen oberen elektrischen Heizwiderstand (14) umfassen, und
- Steuerungsmittel, die konfiguriert sind, um eine Heizung der oberen Heizmittel (14) und eine Heizung der unteren Steuermittel (13) zu steuern, wobei die Steuermittel ein Relais umfassen, das gleichzeitig die oberen Heizmittel (14) und die unteren Heizmittel (13) versorgt,
- ein Kochzubehör (23), das abnehmbar im geschlossenen Heizraum (6) angebracht ist und konfiguriert ist, um eine Tortenplatte (24) zu stützen, wobei das Kochzubehör (23) eine Bodenwand (25) und mindestens einen Stützvorsprung (29) umfasst, auf dem die Tortenplatte (24) aufliegen soll, wobei der mindestens eine Stützvorsprung (29) konfiguriert ist, um die Tortenplatte (24) in Bezug auf die Bodenwand (25) des Kochzubehörs (23) anzuheben und um einen Luftspalt (31) zwischen der Bodenwand (25) des Kochzubehörs (23) und einem Boden der Tortenplatte (24) zu begrenzen, wenn die Tortenplatte (24) auf dem mindestens einen Stützvorsprung (29) aufliegt.

2. Kochgerät (2) nach Anspruch 1, wobei der mindestens eine Stützvorsprung (29) aus einer oberen Fläche der Bodenwand (25) hervorsteht.

3. Kochgerät (2) nach Anspruch 1 oder 2, wobei das Kochzubehör (23) eine Seitenwand (26) umfasst, die sich ausgehend von einem Umfangsrand der Bodenwand (25) nach oben erstreckt.

4. Kochgerät (2) nach Anspruch 3, wobei die Seitenwand (26) des Kochzubehörs (23) zwei Durchgangsaussparungen (28) umfasst, die einander gegenüberliegend angeordnet sind.

5. Kochgerät (2) nach einem der Ansprüche 1 bis 4, wobei das Kochzubehör (23) zwei Griffe (27) zum Greifen umfasst, die einander gegenüberliegend angeordnet sind.

6. Kochgerät (2) nach einem der Ansprüche 1 bis 5, wobei die Bodenwand (25) des Kochzubehörs (23) im Wesentlichen eben ist.

7. Kochgerät (2) nach einem der Ansprüche 1 bis 6, wobei der Deckel (5) eine obere Schale (22) umfasst die konfiguriert ist, um dem Kochzubehör (23) zugewandt angeordnet zu sein, wenn der Deckel (5) die geschlossene Position einnimmt, wobei die obere Schale (22) und das Kochzubehör (23) konfiguriert sind, um mindestens teilweise einen Kochraum zu begrenzen, wenn der Deckel (5) die geschlossene Position einnimmt.

8. Kochgerät (2) nach einem der Ansprüche 1 bis 7, das Positionierungs- und Haltemittel umfasst, die konfiguriert sind, um das Kochzubehör (23) im geschlossenen Heizraum (6) zu positionieren und das Kochzubehör (23) beabstandet zu den unteren Heizmitteln zu halten.

9. Kochgerät (2) nach einem der Ansprüche 1 bis 8, das eine Backfläche (21) umfasst, die konfiguriert ist, um zwischen den unteren Heizmitteln und dem Kochzubehör (23) eingerichtet zu sein.

10. Kochgerät (2) nach einem der Ansprüche 1 bis 9, wobei das Kochzubehör (23) konfiguriert ist, um von den unteren Heizmitteln in einem Abstand von mehr als 2,5 cm beabstandet zu sein

11. Kochgerät (2) nach einem der Ansprüche 1 bis 10, wobei der Deckel (5) mittels einer Schwenkverbindung, die auf einem Rückabschnitt des Kochbehälters (3) angeordnet ist, angelenkt auf der Basis (4) angebracht ist.

12. Kochgerät (2) nach einem der Ansprüche 1 bis 11, wobei der Deckel (5) und die Basis (4) jeweils einen oberen Reflektor (17) und einen unteren Reflektor (15) umfassen, die konfiguriert sind, um den geschlossenen Heizraum (6) zu bilden, wenn der Deckel (5) die geschlossene Position einnimmt.

13. Kochgerät (2) nach einem der Ansprüche 1 bis 12, das weiter mindestens eine Form (35) umfasst, die konfiguriert ist, um abnehmbar im geschlossenen Heizraum (6) angebracht zu werden, wenn das Kochzubehör (23) aus dem geschlossenen Heizraum (6) entnommen wird.

## Claims

1. Cooking appliance (2) for culinary preparations, comprising:
- a cooking housing (3) comprising a base (4) and a lid (5) hingedly mounted on the base (4) between an open position wherein a culinary preparation can be introduced into the cooking housing (3) and a closed position wherein the base (4) and the lid (5) delimit a closed heating chamber (6),
- the cooking appliance (2) further comprising lower means of heating provided in the base (4) comprising a lower electrical heating resistance (13) and upper means of heating provided in the lid (5) comprising an upper electrical heating resistance (14), and
- control means configured to control a heating of the upper means of heating (14) and a heating of the lower means of heating (13), said control means comprising a relay that simultaneously supplies the upper means of heating (14) and the lower means of heating (13).
- a cooking accessory (23) removably mounted in the closed heating chamber (6) and configured to support a pie plate (24), the cooking accessory (23) comprising a bottom wall (25) and at least one support protrusion (29) whereon the pie plate (24) is intended to rest, the at least one support protrusion (29) being configured to raise the pie plate (24) relative to the bottom wall (25) of the cooking accessory (23) and to delimit an air gap (31) between the bottom wall (25) of the cooking accessory (23) and a bottom of the pie plate (24), when the pie plate (24) rests on the at least one support protrusion (29).

2. Cooking appliance (2) according to claim 1, wherein the at least one support protrusion (29) protrudes from an upper face of the bottom wall (25).

3. Cooking appliance (2) according to claim 1 or 2, wherein the cooking accessory (23) comprises a side wall (26) extending upwards from a peripheral edge of the bottom wall (25).

4. Cooking appliance (2) according to claim 3, wherein the side wall (26) of the cooking accessory (23) comprises two passage notches (28) located opposite one another.

5. Cooking appliance (2) according to any one of claims 1 to 4, wherein the cooking accessory (23) comprises two gripping handles (27) located opposite one another.

6. Cooking appliance (2) according to any one of claims 1 to 5, wherein the bottom wall (25) of the cooking accessory (23) is substantially flat.

7. Cooking appliance (2) according to any one of claims 1 to 6, wherein the lid (5) comprises an upper tank (22) that is configured to be located facing the cooking accessory (23) when the lid (5) is in the closed position, the upper tank (22) and the cooking accessory (23) being configured to delimit at least partially a cooking chamber when the lid (5) is in the closed position.

8. Cooking appliance (2) according to any one of claims 1 to 7, that comprises means for positioning and maintaining configured to position the cooking accessory (23) in the closed heating chamber (6) and maintain the cooking accessory (23) at a distance from the lower means of heating.

9. Cooking appliance (2) according to any one of claims 1 to 8, that comprises a cooking hearth (21) configured to be arranged between the lower means of heating and the cooking accessory (23).

10. Cooking appliance (2) according to any one of claims 1 to 9, wherein the cooking accessory (23) is configured to be spaced apart from the lower means of heating by a distance greater than 2.5 cm.

11. Cooking appliance (2) according to any one of claims 1 to 10, wherein the lid (5) is hingedly mounted on the base (4) by a pivot connection located on a rear portion of the cooking housing (3).

12. Cooking appliance (2) according to any one of claims 1 to 11, wherein the lid (5) and the base (4) respectively comprise an upper reflector (17) and a lower reflector (15) which are configured to form the closed heating chamber (6) when the lid (5) is in the closed position.

13. Cooking appliance (2) according to any one of claims 1 to 12, that further comprises at least one mold (35) configured to be removably mounted in the closed heating chamber (6) when the cooking accessory (23) is removed from the closed heating chamber (6).
